# EUROPÄISCHE PATENTSCHRIFT

(11) **EP 3 741 813 B1**
(45) Veröffentlichungstag und Bekanntmachung des Hinweises auf die Patenterteilung: **27.11.2024**
(21) Anmeldenummer: 19175865.5
(22) Anmeldetag: 22.05.2019
(51) Int. Cl.: C09D 5/02, C09D 7/61, C09D 1/02, C09D 133/04, C09D 125/14, C09D 7/40, C09D 7/63

(54) **DISPERSIONSFARBE, BESCHICHTUNG UND VERWENDUNG DER DISPERSIONSFARBE**
DISPERSION PAINT, COATING AND USE OF THE DISPERSION PAINT
PEINTURE À DISPERSION, REVÊTEMENT ET UTILISATION DE LA PEINTURE À DISPERSION

(43) Veröffentlichungstag der Anmeldung: 25.11.2020
(73) Patentinhaber: DAW SE, 64372 Ober-Ramstadt (DE)
(72) Erfinder: BRENNER, Thomas, 64367 Mühltal (DE); WESTMEIER, Johannes, 64572 Büttelborn (DE); GROßKOPF, Jan, 64367 Mühltal (DE); SEEGER, Alexander, 64739 Höchst (DE)
(74) Vertreter: Metten, Karl-Heinz

(56) Entgegenhaltungen:
- EP-A1- 2 998 367
- EP-A1- 3 252 109
- EP-A1- 3 505 576
- DE-A1- 102016 002 221
- DE-A1- 3 713 495

## Beschreibung

Die vorliegende Erfindung betrifft eine Dispersionsfarbe. Des Weiteren betrifft die Erfindung Substrate, insbesondere flächige Substrate, mit einer Beschichtung auf Basis der erfindungsgemäßen Dispersionsfarbe sowie die Verwendung der Dispersionsfarbe für die Beschichtung von Substratoberflächen, insbesondere Gebäudewänden.

Für die farbliche Gestaltung von Gebäudewänden sind seit langem zahlreiche Beschichtungssysteme bekannt. Diese basieren zum Beispiel auf Dispersionsfarben, Silikatfarben oder Dispersionssilikatfarben. In Abhängigkeit davon, ob eine Beschichtungszusammensetzung für die Aufbringung an einer Gebäudefassade oder im Gebäudeinneren vorgesehen ist, sind unterschiedlichste Eigenschaftsprofile zu erfüllen.

Die EP 3 252 109 A1 offenbart eine Beschichtungszusammensetzung, umfassend oder bestehend aus mindestens einem organischen Bindemittel, Wasserglas, Kieselsol, mindestens einem ersten Füllstoff und/oder mindestens einem ersten Pigment mit einer Partikelgröße D50 kleiner oder gleich 2,0 µm, wobei der Trockengewichtsanteil an Kieselsol größer ist als der Trockengewichtsanteil an Wasserglas, jeweils bezogen auf das Gesamttrockengewicht der Beschichtungszusammensetzung. Solche Beschichtungszusammensetzung sollen gute Nassabriebseigenschaften aufweisen.

Die DE 10 2016 002221 A1 stellt ab auf eine Dispersionsfarbe enthaltend 1 bis 15 Gew.-% Pigment, 30 bis 60 Gew.-% Füllstoff, 1 bis 25 Gew.-% Polymer, 0,1 bis 3,5 Gew.-% Alkalimetallalkylsilikonat und 25 bis 70 Gew.-% Wasser, jeweils bezogen auf das Gesamtgewicht der Dispersionsfarbe, wobei der pH-Wert der Dispersionsfarbe 10 bis 12 betragen soll. In solchen Dispersionsfarben sollen die Komponenten untereinander kompatibel sein und sich durch eine gute Verarbeitbarkeit auszeichnen. Auch soll eine solche Dispersionsfarbe auch ohne Konservierungsmittel nach einer Lagerzeit von mehreren Wochen keine Verfärbungen aufweisen. Schließlich soll der pH Wert solcher Dispersionsfarben über eine Lagerzeit von mehreren Wochen im Wesentlichen konstant bleiben.

Die EP 3 505 576 A1 offenbart einen wässrigen Beschichtungsstoff bestehend aus oder enthaltend Füllstoffe, mindestens ein organisches Bindemittel, kein Titandioxid oder Titandioxid in einer Menge, gerechnet als Feststoffanteil, kleiner 1,0 Gewichtsprozent, und mindestens ein Additiv. Die Füllstoffe bestehen aus oder umfassen mindestens einen ersten Füllstoff mit einem D50-Wert im Bereich von 0,40 bis 1,2 µm und mindestens einen zweiten Füllstoff bestehend aus oder umfassend mindestens einen silikatischen Füllstoff. Solche Beschichtungsstoffe sollen auch ohne bzw. nahezu ohne den Einsatz von Titandioxid ein zufriedenstellendes Nass- und Trockendeckvermögen zeigen.

Aus der EP 2 998 367 A1 sind silikatische Putzbeschichtungsmassen bekannt. Diese umfassen mindestens einen silikatischen Füllstoff und/oder mindestens einen calcitischen Füllstoff, mindestens einen Leichtfüllstoff, Kieselsol, mindestens ein Wasserglas, Körnungsmaterial, mindestens ein organisches Bindemittel, Additive und Wasser, wobei die Putzbeschichtungsmasse über einen pH-Wert von mindestens 9,5 verfügt. Diese Putzbeschichtungsmassen sollen über einen hohen Anteil an Füllstoffen verfügen können, bei gleichzeitig geringem Anteil an Bindemittel.

Die DE 37 13 495 A1 wiederum stellt auf Grundierungen für Anstrichfarben auf Wasserglasbasis ab. Grundierungen gemäß der DE 37 13 495 A1 enthalten 5 bis 20 Gew.-% Wasserglas, 15 bis 40 Gew.-% Polyacrylat, 5 bis 20 Gew.-% amorphen synthetischen Füllstoff sowie übliche Additive. Mit solchen Grundierungen solchen sich Untergründe, beispielsweise Beton, vor Kohlenstoffdioxid abschirmen lassen.

Um seidenglänzende bis hochglänzende Beschichtungsflächen mithilfe von zum Beispiel Dispersionsfarben zu erhalten, sind regelmäßig vergleichsweise hohe Bindemittelanteile erforderlich. Ansonsten werden häufig keine weitgehend geschlossenen und ebenmäßigen reflektierende Oberfläche erhalten. Auch ist es für solche seidenglänzenden bis hochglänzenden Oberflächen mitunter schwierig, ein hinreichend hohes Deckvermögen zu erzielen. Zwar ist man insbesondere bei Anwendungen, die ohne herkömmliche Konservierungsmittel auskommen sollen, zu Beschichtungsmasse enthaltend Wasserglas übergegangen, allerdings geht mit der Anwesenheit von Wasserglas in einer Formulierung stets ein mattierender Effekt einher. Seidenglänzende bis hochglänzende Beschichtungsflächen sind daher bislang mithilfe von Formulierungen enthaltend Wasserglas nicht oder nur bedingt zugänglich.

Der vorliegenden Erfindung lag daher die Aufgabe zugrunde, eine Beschichtungsmasse zur Verfügung zu stellen, die nicht mehr mit den Nachteilen des Stands der Technik behaftet ist und die insbesondere seidenglänzende bis hochglänzende Beschichtungsflächen liefert, vorzugsweise ohne auf konservierungsmittelhaltige Beschichtungsmassen angewiesen zu sein. Insbesondere lag der vorliegenden Erfindung die Aufgabe zu Grunde, lagerstabile konservierungsmittelfreie Beschichtungsmassen zur Verfügung zu stellen, mit denen seidenglänzende sowie insbesondere glänzende oder hochglänzende Beschichtungen zugänglich sind.

Demgemäß wurde eine wässrige Dispersionsfarbe mit einem pH-Wert im Bereich von 10,0 bis 12,5, vorzugsweise mit einem pH-Wert im Bereich von 10,5 bis 11,5, oder eingestellt auf einen pH-Wert im Bereich von 10,0 bis 12,5, vorzugsweise auf einen pH-Wert im Bereich von 10,5 bis 11,5, gefunden, enthaltend oder bestehend aus
a) mindestens einem polymeren organischen Bindemittel auf Basis einer wässrigen Dispersion,
b) mindestens einem silikatischen Füllstoff b1), wobei der mindestens eine silikatische Füllstoff b1) kationenreiche Schichtsilikate, kationenarme Schichtsilikate, Cristobalit, Cristobalit-basierte Minerale, bei denen Si-Gerüstatome des Cristobalit partiell gegen Al-, Alkali- und/oder Erdalkaliatome substituiert sind, amorphe Silikate und/oder glasartigen Silikate umfasst,
c) mindestens einem Pigment,
d) mindestens einem Alkylalkoxysilan, Alkylalkoxysiloxan und/oder Alkylsilikonat, insbesondere Alkalimethylsilikonat,
e) mindestens einem Additiv,
g) Wasserglas und
h) mindestens einem Amin-basierten Wasserglasstabilisator sowie
f) gegebenenfalls mindestens einem Leichtfüllstoff in Form polymerer Hohlkörper,

wobei die Menge an Wasserglas (Feststoffanteil), bezogen auf das Gesamtgewicht der Dispersionsfarbe, im Bereich von 0,2 bis kleiner 2,0 Gewichtsprozent liegt und
wobei das Wasserglas eine Molverhältniszahl (MVZ) im Bereich von 2,2 bis 4,0 aufweist.

Die erfindungsgemäßen Dispersionsfarben enthalten Wasser. Der Wassergehalt der erfindungsgemäßen Dispersionsfarben liegt in einer bevorzugten Ausführungsform, bezogen auf das Gesamtgewicht der Dispersionsfarbe, im Bereich von 20 bis 70 Gew.-%, besonders bevorzugt im Bereich von 25 bis 60 Gew.-% und insbesondere im Bereich von 30 bis 55 Gew.-%. Der Gehalt der weiteren, die erfindungsgemäße wasserenthaltende Dispersionsfarbe bildenden Komponenten liegt in der Summe dann vorzugsweise im Bereich von 30 bis 80 Gew.-%, besonders bevorzugt im Bereich von 40 bis 75 Gew.-% und insbesondere im Bereich von 45 bis 70 Gew.-%. Sämtliche die erfindungsgemäßen Dispersionsfarben bildenden Komponenten addieren sich stets zu 100,0 Gew.-%.

Die erfindungsgemäßen wässrigen Dispersionsfarbe sind in einer bevorzugten Ausgestaltung frei von Konservierungsmitteln. Die erfindungsgemäßen Dispersionsfarben werden im Sinne der vorliegenden Erfindung im Einklang mit der "Vergabegrundlage für Umweltzeichen" der RAL gGmbH betreffend "Emissionsarme Innenwandfarben RAL-UZ 102" (Ausgabe Januar 2015) als konservierungsmittelfrei angesehen, wenn darin keine Konservierungsmittel oder Konservierungsmittel, auf die Einzelsubstanz bezogen (einschließlich Formaldehyd), in einer Menge kleiner 2 ppm, sowie in Bezug auf CIT (5-Chlor-2-methyl-4-isothiazolin ) in einer Menge kleiner 0,5 ppm enthalten sind.

In einer weiteren, ebenfalls bevorzugten Ausgestaltung enthalten die erfindungsgemäßen Dispersionsfarben keine Kieselsole. Kieselsole sind dem Fachmann bekannt. Sie sind im Handel in Form wässriger kolloidaler Suspensionen von Polykieselsäure erhältlich.

Die der Erfindung zugrunde liegende Aufgabe wird auf besonders zufriedenstellende Weise durch solche erfindungsgemäßen wässrigen Dispersionsfarben gelöst, die ferner
g) Wasserglas ausgewählt aus Natrium-, Kalium-, Lithiumwasserglas und deren Mischungen, besonders bevorzugt Kalium- oder Lithiumwasserglas enthalten.

In erfindungsgemäßen Dispersionsfarben weist das Wasserglas vorteilhafter Weise eine Molverhältniszahl (MVZ) im Bereich von 2,5 bis 3,8, bevorzugt im Bereich von 3,2 bis 3,8, auf. Der Fachmann versteht unter der Molverhältniszahl das formale Molverhältnis von SiOz zu M₂O, wobei M für ein Alkalimetall steht. Demgemäß lässt sich beispielsweise für Kaliumwasserglas die Molverhältniszahl MVZ nach der folgenden Formel ermitteln: MVZ = n_{SiO2}/ n_{K2O}).

Die Menge an Wasserglas (Feststoffanteil), bezogen auf das Gesamtgewicht der Dispersionsfarbe, liegt bei den erfindungsgemäßen Dispersionsfarben insbesondere im Bereich von 0,3 bis 1,2 Gewichtsprozent.

Insbesondere mit erfindungsgemäßen wässrigen Dispersionsfarben enthaltend die vorangehend genannten Mengen an Wasserglas lassen sich Farbbeschichtungen mit einem ausgeprägten Glanz, z.B. ermittelt bei einem Betrachtungswinkel von 60° nach DIN EN ISO 2813:2014 (Ausgabedatum: 2015-02) und eingestuft gemäß DIN EN 13300 (Ausgabe 11.2002) erhalten.

Bei Wasserglas handelt es sich z.B. um Reaktionsprodukte aus Alkalikarbonaten bzw. - hydroxiden mit Quarzsand. Diese werden kommerziell häufig in Form wässriger Lösungen angeboten. Wasserglas kann grundsätzlich auch in Pulverform eingesetzt werden. Der pH-Wert der erfindungsgemäßen wässrigen Dispersionsfarben kann auch durch die zugesetzte Menge an Wasserglas eingestellt werden. Alternativ oder zusätzlich kann für die pH-Wert-Einstellung auch auf Basen wie Alkali- oder Erdalkalihydroxide wie Kaliumhydroxid und/oder auf Aminverbindungen, z.B. 2-Amino-2-ethyl-1, 3-propandiol, zurückgegriffen werden. Auch wird Wasserglas in den erfindungsgemäßen wässrigen Dispersionsfarben zur Pufferung des pH-Werts auf Werte im Bereich von 10,0 bis 12,5 und vorzugsweise 10,5 bis 11,5 verwendet. Eine sehr zufriedenstellende Pufferwirkung wird beispielsweise mit Wasserglasgehalten im Bereich von 0,1 bis 1,0, vorzugsweise 0,1 bis 0,8 Gewichtsprozent (Festgehalt) erzielt. Es wurde überraschend gefunden, dass bei Verwendung insbesondere der vorangehend genannten Wasserglasgehalte der Glanzgrad der erhaltenen Beschichtungen nicht oder nur allenfalls geringfügig beeinflusst wird.

Die erfindungsgemäßen wässrigen Dispersionsfarben enthalten mindestens einen Amin-basierten Wasserglasstabilisator. Der Trockengewichtsanteil des mindestens einen Amin-basierten Wasserglas-Stabilisators liegt bezogen auf das Gesamtgewicht der Dispersionsfarbe, bevorzugt im Bereich von 0,1 bis 2 Gewichtsprozent und besonders bevorzugt im Bereich von 0,1 bis 1,0 Gewichtsprozent. Die Stabilisierung besteht vorzugsweise darin, dass eine verarbeitungsgerechte Viskosität der Dispersionsfarbe über eine maximale Lagerzeit erreicht wird. Ohne an eine Theorie gebunden zu sein, wird vermutet, dass diese ausgeprägte Stabilisierung der Viskosität auch auf die gleichzeitige Verwendung der Komponente d) zurückgeführt werden kann.

In den erfindungsgemäßen wässrigen Beschichtungsmassen wird bevorzugt auf solche silikatischen Füllstoffe b1) zurückgegriffen, die ausgewählt sind aus der Gruppe bestehend aus Quarziten, Schichtsilikaten, Feldspaten, Vulkaniten und Kieselerden, bevorzugt Schichtsilikate und/oder Feldspate. Selbstverständlich können auch beliebige Mischungen dieser silikatischen Füllstoffe eingesetzt werden. Unter den silikatischen Füllstoffen b1) lässt sich die der Erfindung zugrunde liegende Aufgabe insbesondere bei Verwendung von Kaolin besonders zufriedenstellend lösen.

Silikatische Füllstoffe b1) im Sinne der vorliegenden Erfindung gehen zurück auf die Gruppe bestehend aus kationenreichen Schichtsilikaten, kationenarmen Schichtsilikaten, Cristobalit, Cristobalit-basierten Mineralen, bei denen Si-Gerüstatome des Cristobalit partiell gegen Al-, Alkali- und/oder Erdalkaliatome substituiert sind, amorphen Silikaten, glasartigen Silikaten und beliebigen Mischungen hiervon.

Die silikatischen Füllstoffe b1) verfügen vorzugsweise über einen d50-Wert kleiner oder gleich 6,0 µm, besonderes bevorzugt kleiner oder gleich 4,0 µm, und/oder, vorzugsweise und, über einen d90 Wert kleiner oder gleich 10,0 µm, besonders bevorzugt kleiner oder gleich 8,0 µm. Die Partikelgröße D₅₀ kann dabei auf der Basis der DIN ISO 9276-1:2004-09 (Darstellung der Ergebnisse von Partikelgrößenanalysen - Teil 1: grafische Darstellung) und ISO 9276-2:2014-05 (Darstellung der Ergebnisse von Partikelgrößenanalysen - Teil 2: Berechnung von mittleren Partikelgrößen/-durchmessern und Momenten aus Partikelgrößenverteilungen) ermittelt werden. Für die Messung der durchschnittlichen Partikelgröße, d.h. der d50-Wert, kann ein sogenannter Laser Scattering Particle Size Distribution Analyser, wie von der Firma Retsch Technology GmbH, Haan, Deutschland, unter der Gerätebezeichnung "Horiba LA 950 V2" erhältlich, verwendet werden.

Der Gewichtsanteil an dem mindestens einen silikatischen Füllstoff b1), bezogen auf das Gesamtgewicht der Dispersionsfarbe, liegt in zweckmäßigen Ausgestaltungen oberhalb 2 Gewichtsprozent, vorzugsweise oberhalb 4 Gewichtsprozent und besonders bevorzugt im Bereich von 5 bis 50 Gewichtsprozent.

Die erfindungsgemäßen wässrigen Dispersionsfarben umfassen ferner mindestens einen calcitischen Füllstoff b2). Bei den erfindungsgemäßen wässrigen Dispersionsfarben wird außerdem bevorzugt auf solche calcitischen Füllstoffe b2) zurückgegriffen, die ausgewählt sind aus der Gruppe bestehend aus Calciumcarbonat, Dolomit, Calciten, Aragoniten und beliebigen Mischungen dieser Füllstoffe.

Die calcitischen Füllstoffe b2) verfügen vorzugsweise über einen d50-Wert kleiner oder gleich 3,0 µm, insbesondere kleiner oder gleich 1,5 µm. Alternativ oder insbesondere zusätzlich weisen die calcitischen Füllstoffe b2) einen d90 Wert kleiner oder gleich 8,0 µm und insbesondere kleiner oder gleich 2,0 µm auf.

Der Gewichtsanteil an dem mindestens einen calcitischen Füllstoff b2), bezogen auf das Gesamtgewicht der Dispersionsfarbe, liegt in zweckmäßigen Ausgestaltungen im Bereich von 0 bis 35 Gewichtsprozent, vorzugsweise im Bereich von 0,5 bis 30 Gewichtsprozent und besonders bevorzugt im Bereich von 0,5 bis 10 Gewichtsprozent, liegt.

Schließlich enthalten die erfindungsgemäßen Dispersionsfarben auch Additive. Diese werden für die erfindungsgemäßen Dispersionsfarben bevorzugt ausgewählt aus der Gruppe bestehend aus Stabilisatoren, Netzmitteln, Verdickern, Dispergiermitteln, Neutralisationsmitteln, Entschäumern und beliebigen Mischungen dieser Komponenten. Geeignete Verdicker umfassen z.B. Acrylatverdicker, Polyurethanverdicker, Verdicker auf Polysaccharidbasis oder Verdicker auf Polyether-Polyolbasis oder deren beliebige Mischung. Besonders bevorzugt enthalten die erfindungsgemäßen Dispersionsfarben Entschäumer, Verdicker, insbesondere Celluloseether- und/oder Assoziativ-Verdicker, und Netzmittel, insbesondere auf Basis von Polyacrylat-Copolymeren.

Der Trockengewichtsanteil an Additiven e), bezogen auf das Gesamtgewicht der Disperisionsfarbe, liegt besonders zweckmäßig im Bereich von 0,2 bis 5 Gewichtsprozent, vorzugsweise im Bereich von 0,5 bis 3,0 Gewichtsprozent.

Die erfindungsgemäßen wässrigen Dispersionsfarbe enthalten mindestens ein polymeres organisches Bindemittel auf Basis einer wässrigen Dispersion, wobei bevorzugt auf wässrige Styrol/Acrylat-Copolymer-Dispersionen zurückgegriffen wird. Grundsätzlich kommen als geeignete polymere organische Bindemittel Vinylacetat/Ethylen-Copolymere, Copolymere auf Basis von Vinylaromaten, insbesondere Styrol, und Acrylaten oder auf Basis von Reinacrylaten, insbesondere auf der Basis von Reinacrylaten genannt. Reinacrylate umfassen Homo- und insbesondere Copolymere von (Meth)acrylaten, d.h. Acrylaten und/oder Methacrylaten, gegebenenfalls auch mit (Meth)acrylsäure, d.h. Acryl- und/oder Methacrylsäure, als Comonomerbaustein. Das organische Bindemittel wird in einer besonders zweckmäßigen Ausgestaltung in Form einer wässrigen Bindemitteldispersion eingesetzt. Demgemäß kommen als organische Bindemittel insbesondere auch solche in Frage, bei denen die in Wasser dispergierten oder dispergierbaren Polymere aus gleichen oder verschiedenen Monomeren gebildet sind, wobei mindestens eines der Monomere ein Acrylsäureester, Methacrylsäurester, Acrylsäure, Methacrylsäure, Vinylacetat, Vinylchlorid, Versatat, Acrylitril oder eine vinylaromatische Verbindung darstellt. In einer besonders bevorzugten Ausgestaltung basiert das in Wasser dispergierte oder dispergierbare Polymer dabei auf i) Acrylsäureestern und Vinylaromaten, insbesondere Styrol. Geeignete Acrylatbindemittel verfügen in einer zweckmäßigen Ausgestaltung über eine Molmasse im Bereich von 300.000 g/ mol und darüber.

Der Trockengewichtsanteil dieser organischen Bindemittel kann grundsätzlich in weiten Bereichen variiert werden. Solche erfindungsgemäßen wässrigen Dispersionsfarben sind bevorzugt, bei denen der Trockengewichtsanteil an organischem Bindemittel, bezogen auf das Gesamttrockengewicht der Dispersionsfarbe, im Bereich von 5 bis 35 Gewichtsprozent und vorzugsweise im Bereich von 15 bis 30 Gewichtsprozent liegt.

Die erfindungsgemäßen wässrigen Dispersionsfarbe enthalten in einer bevorzugten Ausführungsform das mindestens eine Pigment c), insbesondere Titandioxid, vorzugsweise in der Rutil-Modifikation, in einer Menge, bezogen auf das Gesamtgewicht der Dispersionsfarbe, größer oder gleich 1 Gewichtsprozent, bevorzugt größer oder gleich 2 Gewichtsprozent, besonders bevorzugt größer oder gleich 3 Gewichtsprozent und insbesondere im Bereich von 3 bis 35 Gewichtsprozent und vorteilhafterweise im Bereich von 5 bis 25 Gewichtsprozent liegt. Exemplarisch seien als geeignete Pigmente anorganische Pigmente wie Bunt-, Schwarz- und Weißpigmente (Farbpigmente) sowie Glanzpigmente und organische Pigmente wie Bunt- und Schwarzpigmente genannt.

Als geeignete anorganische Weißpigmente kommen zum Beispiel Titandioxid, Zinkweiß, Farbenzinkoxid; Zinksulfid und/oder Lithopone in Betracht. Unter den anorganischen Chucks Schwarzpigmenten kann zum Beispiel ausgewählt werden unter Eisenoxidschwarz, Eisen-Mangan-Schwarz, Spinellschwarz und/oder Ruß.

Als geeignete anorganische Buntpigmente kann zum Beispiel zurückgegriffen werden auf Chromoxid, Chromoxidhydratgrün, Chromgrün, Cobaltgrün, Ultramaringrün, Kobaltblau, Ultramarinblau, Manganblau, Ultramarin violett, Kobalt- und Manganviolett, Eisenoxidrot, Cadmiumsulfoselenid, Cersulfid, Molybdatrot, Ultramarinrot, Eisenoxidbraun, Mischbraun, Spinell- und Korundphasen, Chromtitangelb, Chromorange, Cersulfid, Eisenoxidgelb, Nickeltitangelb, Chromtitangelb, Spinellphasen, Cadmiumsulfid, Cadmiumzinksulfid, Chromgelb und/oder Bismutvanadat.

Besonders geeignete Pigmente umfassen zum Beispiel Titandioxid, Zinksulfid, Zinkoxid, Baryt, Ruß, Graphit Eisenoxid, Chromoxid, Kobaltblau, Phtalocyaninpigment, Spinellpigment, Nickeltitanat, Chromtitanat und deren beliebige Mischungen.

Es hat sich gezeigt, dass bei Anwesenheit von Pigmenten das Deckvermögen der erfindungsgemäßen Dispersionsfarben nochmals gesteigert werden kann.

Besonders bevorzugt kommen als Pigmente Titandioxid und/oder Zinksulfid zum Einsatz. Geeignete Pigmente können sowohl unbeschichtet wie auch beschichtet vorliegen. Unbeschichtete Pigmente, beispielsweise photokatalytisch aktive unbeschichtete Pigmente wie unbeschichtetes Titandioxid sind dem Fachmann bekannt.

In den erfindungsgemäßen wässrigen Dispersionsfarben sind in einer bevorzugten Ausführungsform auch Leichtfüllstoffe enthalten, vorzugsweise in Form von polymeren Hohlkörpern. Diese Leichtfüllstoffe können in den erfindungsgemäßen Dispersionsfarben in Mengen, bezogen auf das Gesamtgewicht der Dispersionsfarbe, im Bereich von 0 bis 25 Gewichtsprozent und vorzugsweise im Bereich von 0,5 bis 15 Gewichtsprozent vorliegen. Leichtfüllstoffe im Sinne der vorliegenden Erfindung unterscheiden sich von Füllstoff im Sinne der Erfindung, dadurch, dass Letzterer über eine Schüttdichte größer 600 g/l verfügen und dass erstere eine Schüttdichte kleiner oder gleich 600 g/l, insbesondere kleiner oder gleich 500 g/l, sowie besonders bevorzugt im Bereich von 50 bis 500 g/l, aufweisen. Die Schüttdichte von Leichtfüllstoffen kann gemäß dem Fachbuch "Füllstoffe", 2. Aufl., (dort Seiten 75 und 76) von Detlef Gysau mit Hilfe der Norm ISO 697 ermittelt werden. Die Schüttdichte berechnet sich dabei regelmäßig aus dem Quotienten aus der Masse und dem eingenommenen Volumen, das Zwischenräume und mögliche Hohlräume durch Poren einschließt. Indem man zusätzlich die genannten Leichtfüllstoffe in die erfindungsgemäße Dispersionsfarbe einarbeitet, wird diese beim Aufrühren nochmals voluminöser. Geeignete Leichtfüllstoffe können dabei ausgewählt werden aus der Gruppe bestehend aus Glasbubbles, Blähglas, z.B. Blähglasgranulat, geblähten vulkanischen Gesteinen, insbesondere Perlite; expandierten Perliten; Blähton; Blähschiefer; Glasbeton; Schaumglas; porösem Vulkangestein, insbesondere Bims; Flugasche; Kesselsand; geblähtem Vermiculit; silikatischen Mikrohohlkugeln, insbesondere Alumosilikathohlkugeln; Aluminiumsilikaten, insbesondere expandierten Aluminiumsilikaten und/oder amorphen Aluminiumsilikaten; Calciumsilikathydraten; Schichtsilikaten; Korkpartikeln, polymeren Hohlkörpern und beliebigen Mischungen der genannten Leichtfüllstoffe. Unter den Leichtfüllstoffen sind polymere Hohlkörper besonders bevorzugt, ganz besonders bevorzugt sind Hohlkörper aus organischen Polymeren.

Die erfindungsgemäße wässrige Dispersionsfarbe enthält ferner mindestens ein Alkylalkoxysilan, Alkylalkoxysiloxan und/oder Alkylsilikonat (Komponente d)). Besonders bevorzugt wird für die Komponente d) auf Alkalimethylsilikonat zurückgegriffen. Der Trockengewichtsanteil der Komponente d), insbesondere an Kaliummethylsilikonat, bezogen auf das Gesamtgewicht der Dispersionsfarbe, liegt zweckmäßigerweise im Bereich von 0,1 bis 2,5 Gewichtsprozent, vorzugsweise im Bereich von 0,2 bis 2,0 Gewichtsprozent und besonders bevorzugt im Bereich von 0,3 bis 1,5 Gewichtsprozent.

Exemplarisch seien als geeignete Vertreter der Alkylalkoxysilane Verbindungen der nachfolgenden Formel (I) genannt: (R¹-O)ₓ(H)_{y}M(R²)_{z} mit M = Si, Ge, Ti, Zr oder Hf, R1 = Methyl, Ethyl, i-Propyl, n-Propyl, i-Butyl, n-Butyl oder t-Butyl, R2 = geradkettig oder verzweigtes C3- bis C32-Alkyl, Cycloalkyl, Aryl, Alkylaryl, x = 1, 2 oder 3, y = 0, 1 oder 2, z = 1, 2 oder 3, wobei x + y = 1, 2 oder 3 und x + y + z = 4 ist. Bevorzugt wird zurückgegriffen auf Verbindung gemäß Formel (I), für die gilt: M = Si, R1 = Ethyl oder i-Propyl oder n-Propyl, insbesondere Ethyl, R2 = geradkettig oder verzweigtes C5- bis C12-Alkyl, insbesondere n-Octyl oder iso-Octyl, und x = 2 oder 3, insbesondere 3, y = 0 und z = 1 oder 2, insbesondere 1. Besonders geeignete Alkylalkoxysilane sind Mono-, Di- oder Triethoxy-(C6-bis C12-Alkyl)-silan, wobei Triethoxy-iso-octylsilan und Triethoxy-n-octylsilan besonders bevorzugt sind.

Geeignete Alkylalkoxysiloxane stellen Dimere und Oligomere der vorangehend genannten Alkylalkoxysilane dar.

Besonders bevorzugt wird auch auf Alkylsilikonate zurückgegriffen, insbesondere auch solche, die wasserlöslich sind. Wasserlösliche Alkylsilikonate umfassen zum Beispiel Verbindungen der Formel (II) HO-[Si(R³)(OX)-O-]ₙH, worin der Rest R³ eine Alkylgruppe mit 1 bis 8 C-Atomen, X ein Kation und n eine Zahl im Bereich von 1 bis 6 bedeutet. Vorzugsweise liegt das Molgewicht dieser Alkylsilikonate im Bereich von 100 bis 500. In einer besonders geeigneten Ausgestaltung ist R3 eine Methyl-, Ethyl-, i-Propyl- oder n-Propylgruppe, vorzugsweise eine Methylgruppe. Als Kationen sind insbesondere die Alkalimetalle, insbesondere Kalium, geeignet. Beispielhaft seien als bevorzugte Alkylsilikonate Kaliummethylsilikonat und Natriumpropylsilikonat genannt. Als besonders vorteilhaft hat sich hier Kaliummethylsilikonat erwiesen.

Unter den erfindungsgemäßen wässrigen Dispersionsfarben sind solche besonders bevorzugt, umfassend
a) das mindestens eine polymere organische Bindemittel auf Basis einer wässrigen Styrol/ Acrylat-Copolymer-Dispersion,
b) den mindestens einen silikatischen Füllstoff b1), bestehend aus oder umfassend Kaolin,
c) das mindestens eine Pigment in Form von Titandioxid,
d) das mindestens eine Alkylalkoxysilan, Alkylalkoxysiloxan und/oder Alkylsilikonat, insbesondere Kaliummethylsilikonat,
e) das mindestens eine Additiv, insbesondere enthaltend oder bestehend aus mindestens einem Entschäumer, mindestens einem Verdicker, insbesondere Celluloseether- und/oder Assoziativ-Verdicker, und mindestens einem Netzmittel, insbesondere auf Basis von Polyacrylat-Copolymeren,
g) das mindestens eine Wasserglas in Form von Kalium- und/oder Lithiumwasserglas, und
h) den mindestens einen Amin-basierten Stabilisator, sowie
f) gegebenenfalls den mindestens einen Leichtfüllstoff in Form polymerer Hohlkörper.

Darüber hinaus sind auch solche erfindungsgemäßen wässrigen Dispersionsfarbe besonders geeignet, bei denen
der Trockengewichtsanteil an organischem Bindemittel a), bezogen auf das Gesamtgewicht der Dispersionsfarbe, im Bereich von 5 bis 35 Gewichtsprozent, vorzugsweise im Bereich von 10 bis 25 Gewichtsprozent, liegt und
der Gewichtsanteil an dem mindestens einen silikatischen Füllstoff b1), bezogen auf das Gesamtgewicht der Dispersionsfarbe, größer 2 Gewichtsprozent, vorzugsweise größer 4 Gewichtsprozent und besonders bevorzugt im Bereich von 5 bis 50 Gewichtsprozent liegt und
der Gewichtsanteil an dem mindestens einen Pigment c), bezogen auf das Gesamtgewicht der Dispersionsfarbe, größer oder gleich 1 Gewichtsprozent, bevorzugt größer oder gleich 2 Gewichtsprozent, besonders bevorzugt größer oder gleich 3 Gewichtsprozent und insbesondere im Bereich von 3 bis 35 Gewichtsprozent und vorteilhafterweise im Bereich von 5 bis 25 Gewichtsprozent liegt und
der Trockengewichtsanteil an Wasserglas g), bezogen auf das Gesamtgewicht der Dispersionsfarbe, im Bereich von 0,3 bis 1,2 Gewichtsprozent liegt und der Trockengewichtsanteil an Alkalialkylsilikonat d), insbesondere Kaliummethylsilikonat, bezogen auf das Gesamtgewicht der Dispersionsfarbe, im Bereich von 0,1 bis 2,5 Gewichtsprozent, vorzugsweise im Bereich von 0,2 bis 2,0 Gewichtsprozent und besonders bevorzugt im Bereich von 0,3 bis 1,5 Gewichtsprozent liegt und
der Trockengewichtsanteil an Additiven e), bezogen auf das Gesamtgewicht der Dispersionsfarbe, im Bereich von 0,2 bis 5 Gewichtsprozent, vorzugsweise im Bereich von 0,5 bis 3,0 Gewichtsprozent, liegt und
der Trockengewichtsanteil des mindestens einen Amin-basierten Wasserglas-Stabilisators g), bezogen auf das Gesamtgewicht der Dispersionsfarbe, im Bereich von 0,1 bis 2 Gewichtsprozent, vorzugsweise im Bereich von 0,2 bis 1,0 Gewichtsprozent, liegt und
der Gewichtsanteil an dem mindestens einen calcitischen Füllstoff b2), bezogen auf das Gesamtgewicht der Dispersionsfarbe, im Bereich von 0 bis 15 Gewichtsprozent, vorzugsweise im Bereich von 0,5 bis 10 Gewichtsprozent liegt, und
der Gewichtsanteil an dem mindestens einen Leichtfüllstoff i) in Form von polymeren Hohlkörpern, bezogen auf das Gesamtgewicht der Dispersionsfarbe, im Bereich von 0 bis 25 Gewichtsprozent, vorzugsweise im Bereich von 0,5 bis 15 Gewichtsprozent liegt, und
der Anteil an Wasser, bezogen auf das Gesamtgewicht der Dispersionsfarbe, im Bereich von 20 bis 70 Gewichtsprozent, vorzugsweise im Bereich von 25 bis 60 Gewichtsprozent, liegt, wobei die die Dispersionsfarbe bildenden Komponenten sich stets zu 100,0 Gew.-% addieren.

Der Trockengewichtsanteil einer Komponente der erfindungsgemäßen Dispersionsfarben wird bestimmt anhand des Trockengewichts dieser Komponente. Hierbei handelt es sich um das Gewicht der Komponente abzüglich, sofern vorhanden, des Anteils an Wasser. Das Gesamttrockengewicht der Dispersionsfarbe stellt folglich das Gewicht derselben abzüglich etwaiger Wasseranteile dar. Eine Komponente ohne Wasseranteil kann hierbei fest, flüssig oder in pastöser Form vorliegen.

Die der Erfindung zugrunde liegende Aufgabe wird des Weiteren gelöst durch eine Beschichtung erhalten aus einer erfindungsgemäßen Dispersionsfarbe. Die mit diesen erfindungsgemäßen Dispersionsfarben erhaltenen Beschichtungen zeichnen sich insbesondere dadurch aus, dass diese einen Glanz der Kategorie "Mittlerer Glanz" ermittelt gemäß DIN EN ISO 2813:2014 (Ausgabedatum: 2015-02) bei einem Messwinkel von 60° sowie 85° und eingestuft gemäß DIN EN 13300 (Ausgabe 11.2002) oder einen Glanz der Kategorie "hochglänzend" ermittelt gemäß DIN EN ISO 2813:2014 (Ausgabedatum: 2015-02) bei einem Messwinkel von 60° und einem Messwinkel von 85° und eingestuft gemäß DIN EN 13300 (Ausgabe 11.2002) aufweisen. Die vorangehend genannten Ergebnisse werden insbesondere auch mit Beschichtungen aus konservierungsmittelfreien erfindungsgemäßen Dispersionsfarben erzielt.

Die erfindungsgemäßen Dispersionsfarben eignen sich insbesondere für die Beschichtung von Substratoberflächen wie Gebäudefassaden oder den Wänden von Gebäudeinnenräumen. Insbesondere können die erfindungsgemäßen Dispersionsfarben eingesetzt werden, um Beschichtungen zu erhalten mit einem Glanz der Kategorie "seidenglänzend" ermittelt gemäß DIN EN ISO 2813:2014 (Ausgabedatum: 2015-02) bei einem Messwinkel von 60° und eingestuft gemäß DIN EN 13300 (Ausgabe 11.2002). Ferner können mit den erfindungsgemäßen Dispersionsfarben auch Beschichtungen erhalten werden mit einem Glanz der Kategorie "hochglänzend" ermittelt gemäß DIN EN ISO 2813:2014 (Ausgabedatum: 2015-02) bei einem Messwinkel von 60° und einem Messwinkel von 85° und eingestuft gemäß DIN EN 13300 (Ausgabe 11.2002).

Mit den erfindungsgemäßen Dispersionsfarben lassen sich ohne weiteres Beschichtungen erhalten, die hinsichtlich des Nassabriebs, bestimmt nach DIN EN ISO 11998:2006-10, in die Klasse 1 gemäß DIN EN 13300 (Ausgabe 11.2002) eingeordnet werden können. Nach der DIN EN 13300 findet eine Einordnung in die Klasse 1 statt, wenn bei 200 Scheuerzyklen ein Nassabrieb kleiner 5 µm, in die Klasse 2, wenn bei 200 Scheuerzyklen ein Nassabrieb von 5 µm bis kleiner 20 µm, in die Klasse 3, wenn bei 200 Scheuerzyklen ein Nassabrieb von 20 µm bis kleiner 70 µm, in die Klasse 4, wenn bei 40 Scheuerzyklen ein Nassabrieb kleiner 70 µm und in die Klasse 5, wenn bei 40 Scheuerzyklen ein Nassabrieb von 70 µm und darüber festgestellt wird.

Mit der vorliegenden Erfindung die überraschende Erkenntnis einher, dass sich bei Verwendung der erfindungsgemäßen wässrigen Dispersionsfarben, insbesondere auch solchen, die im Wesentlichen konservierungsmittelfrei sind, seidenglänzende bis hochglänzende Dispersionsfarbbeschichtungen erhalten lassen.

Interessanterweise sind die erfindungsgemäßen Dispersionsfarben, auch wenn als wässriges System vorliegend, ohne Anwesenheit von Konservierungsmitteln sehr stabil, das heißt sie verfügen über eine ausgeprägte Lagerstabilität. In Form wässriger Systeme stellen die erfindungsgemäßen Dispersionsfarben vorzugsweise konservierungsmittelfreie Dispersionsfarben dar. Dispersionsfarben, auch Kunststoffdispersionsfarben genannt, basieren gemäß DIN 18363:2016-09 auf einer Kunststoffdispersion sowie auf Pigmenten und Füllstoffen.

## Patentansprüche

1. Wässrige Dispersionsfarbe mit einem pH-Wert im Bereich von 10,0 bis 12,5, vorzugsweise mit einem pH-Wert im Bereich von 10,5 bis 11,5, oder eingestellt auf einen pH-Wert im Bereich von 10,0 bis 12,5, vorzugsweise auf einen pH-Wert im Bereich von 10,5 bis 11,5, enthaltend oder bestehend aus
a) mindestens einem polymeren organischen Bindemittel auf Basis einer wässrigen Dispersion,
b) mindestens einem silikatischen Füllstoff b1), wobei der mindestens eine silikatische Füllstoff b1) kationenreiche Schichtsilikate, kationenarme Schichtsilikate, Cristobalit, Cristobalit-basierte Minerale, bei denen Si-Gerüstatome des Cristobalit partiell gegen AI-, Alkali- und/oder Erdalkaliatome substituiert sind, amorphe Silikate und/oder glasartige Silikate umfasst,
c) mindestens einem Pigment,
d) mindestens einem Alkylalkoxysilan, Alkylalkoxysiloxan und/oder Alkylsilikonat, insbesondere Alkalimethylsilikonat,
e) mindestens einem Additiv,
g) Wasserglas und
h) mindestens einem Amin-basierten Wasserglasstabilisator sowie
f) gegebenenfalls mindestens einem Leichtfüllstoff, insbesondere in Form polymerer Hohlkörper,
wobei die Menge an Wasserglas (Feststoffanteil), bezogen auf das Gesamtgewicht der Dispersionsfarbe, im Bereich von 0,2 bis kleiner 2,0 Gewichtsprozent liegt und wobei das Wasserglas eine Molverhältniszahl im Bereich von 2,2 bis 4,0 aufweist.

2. Dispersionsfarbe nach Anspruch 1, **dadurch gekennzeichnet, dass**
diese frei von Konservierungsmitteln ist und/oder kein Kieselsol enthält.

3. Dispersionsfarbe nach Anspruch 1 oder 2, **dadurch gekennzeichnet, dass**
das Wasserglas ausgewählt ist aus Natrium-, Kalium-, Lithiumwasserglas und deren Mischungen und besonders bevorzugt Kalium- oder Lithiumwasserglas darstellt.

4. Dispersionsfarbe nach einem der vorangehenden Ansprüche, **dadurch gekennzeichnet, dass**
das Wasserglas eine Molverhältniszahl im Bereich von 2,5 bis 3,8, bevorzugt im Bereich von 3,2 bis 3,8, aufweist.

5. Dispersionsfarbe nach einem der vorangehenden Ansprüche, ferner umfassend mindestens einen calcitischen Füllstoff b2), insbesondere ausgewählt sind aus der Gruppe bestehend aus Calciumcarbonat, Dolomiten, Calciten, Aragoniten und beliebigen Mischungen dieser Füllstoffe.

6. Dispersionsfarbe nach einem der vorangehenden Ansprüche, **dadurch**
**gekennzeichnet, dass**
der calcitische Füllstoff einen d50-Wert kleiner oder gleich 3,0 µm, insbesondere kleiner oder gleich 1,5 µm, und/oder, vorzugsweise und, einen d90 Wert kleiner oder gleich 8,0 µm, insbesondere kleiner oder gleich 2,0 µm aufweist und/oder der silikatische Füllstoff einen d50-Wert kleiner oder gleich 6,0 µm, insbesondere kleiner oder gleich 4,0 µm, und/oder, vorzugsweise und, einen d90 Wert kleiner oder gleich 10,0 µm, insbesondere kleiner oder gleich 8,0 µm aufweist, wobei die d50- und d90-Werte gemäß DIN ISO 9276-1:2004-09 (Darstellung der Ergebnisse von Partikelgrößenanalysen - Teil 1: grafische Darstellung) und ISO 9276-2:2014-05 (Darstellung der Ergebnisse von Partikelgrößenanalysen - Teil 2: Berechnung von mittleren Partikelgrößen/-durchmessern und Momenten aus Partikelgrößenverteilungen) ermittelbar sind.

7. Dispersionsfarbe nach einem der vorangehenden Ansprüche, **dadurch**
**gekennzeichnet, dass**
der silikatische Füllstoff bei einem pH-Wert im Bereich von 10,0 bis 12,5, vorzugsweise im Bereich von 10,5 bis 11,5, stabil ist.

8. Dispersionsfarbe nach einem der vorangehenden Ansprüche, **dadurch**
**gekennzeichnet**, das
die Menge an Wasserglas (Feststoffanteil), bezogen auf das Gesamtgewicht der Dispersionsfarbe, im Bereich von 0,3 bis 1,2 Gewichtsprozent liegt.

9. Dispersionsfarbe nach einem der vorangehenden Ansprüche, **dadurch**
**gekennzeichnet, dass**
das Additiv ausgewählt ist aus der Gruppe bestehend aus Stabilisatoren, Netzmitteln, Verdickern, Dispergiermitteln, Neutralisationsmitteln, Entschäumern und beliebigen Mischungen dieser Komponenten, und vorzugsweise Entschäumer, Verdicker, insbesondere Celluloseether- und/oder Assoziativ-Verdicker, und Netzmittel, insbesondere auf Basis von Polyacrylat-Copolymeren, umfasst.

10. Dispersionsfarbe nach einem der vorangehenden Ansprüche, umfassend
a) das mindestens eine polymere organische Bindemittel auf Basis einer wässrigen Styrol/Acrylat-Copolymer-Dispersion,
b) den mindestens einen silikatischen Füllstoff b1), bestehend aus oder umfassend Kaolin,
c) das mindestens eine Pigment in Form von Titandioxid, vorzugsweise in der Rutil-Modifikation,
d) das mindestens eine Alkylalkoxysilan, Alkylalkoxysiloxan und/oder Alkylsilikonat, insbesondere Kaliummethylsilikonat,
e) das mindestens eine Additiv, insbesondere enthaltend oder bestehend aus mindestens einem Entschäumer, mindestens einem Verdicker, insbesondere Celluloseether- und/oder Assoziativ-Verdicker, und mindestens einem Netzmittel, insbesondere auf Basis von Polyacrylat-Copolymeren,
g) das mindestens eine Wasserglas in Form von Kalium- und/oder Lithiumwasserglas, und
h) den mindestens einen Amin-basierten Stabilisator, sowie
f) gegebenenfalls den mindestens einen Leichtfüllstoff in Form polymerer Hohlkörper, bevorzugt polymere Hohlkörper aus organischen Polymeren.

11. Dispersionsfarbe nach einem der vorangehenden Ansprüche, **dadurch**
**gekennzeichnet, dass**
der Trockengewichtsanteil an organischem Bindemittel a), bezogen auf das Gesamtgewicht der Dispersionsfarbe, im Bereich von 5 bis 35 Gewichtsprozent, vorzugsweise im Bereich von 15 bis 30 Gewichtsprozent, liegt und/oder dass der Gewichtsanteil an dem mindestens einen silikatischen Füllstoff b1), bezogen auf das Gesamtgewicht der Dispersionsfarbe, größer 2 Gewichtsprozent, vorzugsweise größer 4 Gewichtsprozent und besonders bevorzugt im Bereich von 5 bis 50 Gewichtsprozent liegt und/oder dass
der Gewichtsanteil an dem mindestens einen Pigment c), bezogen auf das Gesamtgewicht der Dispersionsfarbe, größer oder gleich 1 Gewichtsprozent, vorzugsweise größer oder gleich 2 Gewichtsprozent, besonders bevorzugt größer oder gleich 3 Gewichtsprozent und insbesondere im Bereich von 3 bis 35 Gewichtsprozent liegt und/oder dass
der Trockengewichtsanteil an Wasserglas g), bezogen auf das Gesamtgewicht der Dispersionsfarbe, im Bereich von 0,3 bis 1,2 Gewichtsprozent liegt und/oder dass der Trockengewichtsanteil an Alkalialkylsilikonat d), insbesondere Kaliummethylsilikonat, bezogen auf das Gesamtgewicht der Dispersionsfarbe, im Bereich von 0,1 bis 2,5 Gewichtsprozent, vorzugsweise im Bereich von 0,2 bis 2,0 Gewichtsprozent und besonders bevorzugt im Bereich von 0,3 bis 1,5 Gewichtsprozent liegt und/oder dass
der Trockengewichtsanteil an Additiven e), bezogen auf das Gesamtgewicht der Dispersionsfarbe, im Bereich von 0,2 bis 5 Gewichtsprozent, vorzugsweise im Bereich von 0,5 bis 3,0 Gewichtsprozent, liegt und/oder dass der Trockengewichtsanteil des mindestens einen, insbesondere Amin-basierten, Wasserglas-Stabilisators h), bezogen auf das Gesamtgewicht der Dispersionsfarbe, im Bereich von 0,1 bis 2 Gewichtsprozent, vorzugsweise im Bereich von 0,1 bis 1,0 Gewichtsprozent, liegt und/oder dass
der Gewichtsanteil an dem mindestens einen calcitischen Füllstoff b2), bezogen auf das Gesamtgewicht der Dispersionsfarbe, im Bereich von 0 bis 35 Gewichtsprozent, vorzugsweise im Bereich von 0,5 bis 30 Gewichtsprozent liegt, und/oder der Gewichtsanteil an dem mindestens einen Leichtfüllstoff i) in Form von polymeren Hohlkörpern, bezogen auf das Gesamtgewicht der Dispersionsfarbe, im Bereich von 0 bis 25 Gewichtsprozent, vorzugsweise im Bereich von 0,5 bis 15 Gewichtsprozent liegt, und/oder
dass der Anteil an Wasser, bezogen auf das Gesamtgewicht der Dispersionsfarbe, im Bereich von 20 bis 70 Gewichtsprozent, vorzugsweise im Bereich von 25 bis 60 Gewichtsprozent, liegt und/oder dass
wobei die die Dispersionsfarbe bildenden Komponenten sich stets zu 100,0 Gew.-% addieren.

12. Beschichtung erhalten aus einer Dispersionsfarbe nach einem der vorangehenden Ansprüche.

13. Beschichtung nach Anspruch 12, **dadurch gekennzeichnet, dass** diese einen Glanz der Kategorie "Mittlerer Glanz" ermittelt gemäß DIN EN ISO 2813:2014 (Ausgabedatum: 2015-02) bei einem Messwinkel von 60° sowie 85° und eingestuft gemäß DIN EN 13300 (Ausgabe 11.2002) oder einen Glanz der Kategorie "hochglänzend" ermittelt gemäß DIN EN ISO 2813:2014 (Ausgabedatum: 2015-02) bei einem Messwinkel von 60° und einem Messwinkel von 85° und eingestuft gemäß DIN EN 13300 (Ausgabe 11.2002) aufweist.

14. Verwendung der Dispersionsfarbe nach einem der Ansprüche 1 bis 11 für die Beschichtung von Substratoberflächen, insbesondere von Gebäudefassaden oder den Wänden von Gebäudeinnenräumen.

15. Verwendung nach Anspruch 14, **dadurch gekennzeichnet, dass** die Beschichtung eine solche mit einem Glanz der Kategorie "Mittlerer Glanz" ermittelt gemäß DIN EN ISO 2813:2014 (Ausgabedatum: 2015-02) bei einem Messwinkel von 60° und eingestuft gemäß DIN EN 13300 (Ausgabe 11.2002) oder eine solche mit einem Glanz der Kategorie "hochglänzend" ermittelt gemäß DIN EN ISO 2813:2014 (Ausgabedatum: 2015-02) bei einem Messwinkel von 60° und einem Messwinkel von 85° und eingestuft gemäß DIN EN 13300 (Ausgabe 11.2002) ist.

## Claims

1. Aqueous dispersion paint having a pH-value in the range of from 10.0 to 12.5, preferably having a pH-value in the range of from 10.5 to 11.5, or adjusted to a pH-value in the range of from 10.0 to 12.5, preferably to a pH-value in the range of from 10.5 to 11.5, containing or consisting of
a) at least one polymeric organic binder based on an aqueous dispersion,
b) at least one silicate filler b1), wherein the at least one silicate filler b1) comprises cation-rich phyllosilicates, cation-poor phyllosilicates, cristobalite, cristobalite-based minerals in which Si framework atoms of the cristobalite are partially substituted by Al, alkali and/or alkaline earth atoms, amorphous silicates and/or glassy silicates,
c) at least one pigment,
d) at least one alkylalkoxysilane, alkylalkoxysiloxane and/or alkylsiliconate, in particular alkali methylsiliconate,
e) at least one additive,
g) water glass, and
h) at least one amine-based water glass stabilizer, and
f) optionally at least one lightweight filler, in particular in the form of polymeric hollow bodies,
wherein the amount of water glass (solids content), based on the total weight of the dispersion paint, is in the range of from 0.2 to less than 2.0 percent by weight, and wherein the water glass has a molar ratio number in the range of from 2.2 to 4.0.

2. Dispersion paint according to Claim 1, **characterized in that** it is free of preservatives and/or contains no silica sol.

3. Dispersion paint according to Claim 1 or 2, **characterized in that** the water glass is selected from sodium water glass, potassium water glass, lithium water glass, and mixtures thereof, and particularly preferably represents potassium water glass or lithium water glass.

4. Dispersion paint according to any of the preceding claims, **characterized in that** the water glass has a molar ratio number in the range of from 2.5 to 3.8, preferably in the range of from 3.2 to 3.8.

5. Dispersion paint according to any of the preceding claims, further comprising at least one calcitic filler b2), in particular selected from the group consisting of calcium carbonate, dolomites, calcites, aragonites and any mixtures of these fillers.

6. Dispersion paint according to any of the preceding claims, **characterized in that** the calcitic filler has a d50-value of less than or equal to 3.0 µm, in particular less than or equal to 1.5 µm, and/or, preferably and, a d90-value of less than or equal to 8.0 µm, in particular less than or equal to 2.0 µm, and/or
the silicate filler has a d50-value of less than or equal to 6.0 µm, in particular less than or equal to 4.0 µm, and/or, preferably and, a d90-value of less than or equal to 10.0 µm, in particular less than or equal to 8.0 µm, wherein the d50- and d90-values can be determined according to DIN ISO 9276-1:2004-09 (representation of the results of particle size analyses - Part 1: graphical representation) and ISO 9276-2:2014-05 (representation of the results of particle size analyses - Part 2: calculation of average particle sizes/diameters and moments from particle size distributions).

7. Dispersion paint according to any of the preceding claims, **characterized in that** the silicate filler is stable at a pH-value in the range of from 10.0 to 12.5, preferably in the range of from 10.5 to 11.5.

8. Dispersion paint according to any of the preceding claims, **characterized in that** the amount of water glass (solids content), based on the total weight of the dispersion paint, is in the range of from 0.3 to 1.2 percent by weight.

9. Dispersion paint according to any of the preceding claims, **characterized in that** the additive is selected from the group consisting of stabilizers, wetting agents, thickeners, dispersing agents, neutralizing agents, defoamers and any mixtures of these components, and preferably comprises defoamers, thickeners, in particular cellulose ether and/or associative thickeners, and wetting agents, in particular based on polyacrylate copolymers.

10. Dispersion paint according to any of the preceding claims, comprising
a) the at least one polymeric organic binder based on an aqueous styrene/acrylate copolymer dispersion,
b) the at least one silicate filler b1), consisting of or comprising kaolin,
c) the at least one pigment in the form of titanium dioxide, preferably in the rutile modification,
d) the at least one alkylalkoxysilane, alkylalkoxysiloxane and/or alkylsiliconate, in particular potassium methylsiliconate,
e) the at least one additive, in particular containing or consisting of at least one defoamer, at least one thickener, in particular cellulose ether and/or associative thickener, and at least one wetting agent, in particular based on polyacrylate copolymers,
g) the at least one water glass in the form of potassium water glass and/or lithium water glass, and
h) the at least one amine-based stabilizer, and
f) optionally the at least one lightweight filler in the form of polymeric hollow bodies, preferably polymeric hollow bodies of organic polymers.

11. Dispersion paint according to any of the preceding claims, **characterized in that** the dry weight fraction of organic binder a), based on the total weight of the dispersion paint, is in the range of from 5 to 35 percent by weight, preferably in the range of from 15 to 30 percent by weight, and/or **in that**
the weight fraction of the at least one silicate filler b1), based on the total weight of the dispersion paint, is greater than 2 percent by weight, preferably greater than 4 percent by weight, and particularly preferably in the range of from 5 to 50 percent by weight, and/or **in that**
the weight fraction of the at least one pigment c), based on the total weight of the dispersion paint, is greater than or equal to 1 percent by weight, preferably greater than or equal to 2 percent by weight, particularly preferably greater than or equal to 3 percent by weight, and in particular in the range of from 3 to 35 percent by weight, and/or **in that**
the dry weight fraction of water glass g), based on the total weight of the dispersion paint, is in the range of from 0.3 to 1.2 percent by weight, and/or **in that** the dry weight fraction of alkali metal alkylsiliconate d), in particular potassium methylsiliconate, based on the total weight of the dispersion paint, is in the range of from 0.1 to 2.5 percent by weight, preferably in the range of from 0.2 to 2.0 percent by weight, and particularly preferably in the range of from 0.3 to 1.5 percent by weight, and/or **in that**
the dry weight fraction of additives e), based on the total weight of the dispersion paint, is in the range of from 0.2 to 5 percent by weight, preferably in the range of from 0.5 to 3.0 percent by weight, and/or **in that**
the dry weight fraction of the at least one, in particular amine-based, water glass stabilizer h), based on the total weight of the dispersion paint, is in the range of from 0.1 to 2 percent by weight, preferably in the range of from 0.1 to 1.0 percent by weight, and/or **in that**
the weight fraction of the at least one calcitic filler b2), based on the total weight of the dispersion paint, is in the range of from 0 to 35 percent by weight, preferably in the range of from 0.5 to 30 percent by weight, and/or
the weight fraction of the at least one lightweight filler i) in the form of polymeric hollow bodies, based on the total weight of the dispersion paint, is in the range of from 0 to 25 percent by weight, preferably in the range of from 0.5 to 15 percent by weight, and/or **in that**
the fraction of water, based on the total weight of the dispersion paint, is in the range of from 20 to 70 percent by weight, preferably in the range of from 25 to 60 percent by weight, and/or **in that**
wherein the components forming the dispersion paint always add up to 100.0% by weight.

12. Coating obtained from a dispersion paint according to any of the preceding claims.

13. Coating according to Claim 12, **characterized in that**
it has a gloss of the category "average gloss" determined according to DIN EN ISO 2813:2014 (edition date: 2015-02) at a measurement angle of 60° and 85° and classified according to DIN EN 13300 (edition 11.2002) or a gloss of the category "high gloss" determined according to DIN EN ISO 2813:2014 (edition date: 2015-02) at a measurement angle of 60° and a measurement angle of 85° and classified according to DIN EN 13300 (edition 11.2002).

14. Use of the dispersion paint according to any of Claims 1 to 11 for the coating of substrate surfaces, in particular of building facades or the walls of building interiors.

15. Use according to Claim 14, **characterized in that**
the coating is one with a gloss of the category "average gloss" determined according to DIN EN ISO 2813:2014 (edition date: 2015-02) at a measurement angle of 60° and classified according to DIN EN 13300 (edition 11.2002) or one with a gloss of the category "high gloss" determined according to DIN EN ISO 2813:2014 (edition date: 2015-02) at a measurement angle of 60° and a measurement angle of 85° and classified according to DIN EN 13300 (edition 11.2002).

## Revendications

1. Peinture en dispersion aqueuse ayant un pH dans la plage de 10,0 à 12,5, de préférence ayant un pH dans la plage de 10,5 à 11,5, ou ajustée à un pH dans la plage de 10,0 à 12,5, de préférence à un pH dans la plage de 10,5 à 11,5, contenant ou constituée de
a) au moins un liant organique polymère à base d'une dispersion aqueuse,
b) au moins une charge silicatique b1), l'au moins une charge silicatique b1) comprenant des silicates lamellaires riches en cations, des silicates lamellaires pauvres en cations, de la cristobalite, des minéraux à base de cristobalite dans lesquels des atomes de squelette Si de la cristobalite sont partiellement substitués par des atomes d'AI, de métal alcalin et/ou de métal alcalino-terreux, des silicates amorphes et/ou des silicates vitreux,
c) au moins un pigment,
d) au moins un alkylalcoxysilane, un alkylalcoxysiloxane et/ou un alkylsiliconate, en particulier un méthylsiliconate de métal alcalin,
e) au moins un additif,
g) du verre soluble et
h) au moins un stabilisateur de verre soluble à base d'amine ainsi que
f) le cas échéant au moins une charge légère, en particulier sous forme de corps creux polymères,
la quantité de verre soluble (proportion de solides), par rapport au poids total de la peinture en dispersion, est dans la plage de 0,2 à moins de 2,0 pour cent en poids et le verre soluble présentant un indice de rapport molaire dans la plage de 2,2 à 4,0.

2. Peinture en dispersion selon la revendication 1, **caractérisée en ce que** celle-ci est exempte de conservateurs et/ou ne contient pas de sol de silice.

3. Peinture en dispersion selon la revendication 1 ou 2, **caractérisée en ce que** le verre soluble est choisi parmi le verre soluble de sodium, de potassium, de lithium et leurs mélanges et représente de manière particulièrement préférée le verre soluble de potassium ou de lithium.

4. Peinture en dispersion selon l'une quelconque des revendications précédentes, **caractérisée en ce que**
le verre soluble présente un indice de rapport molaire dans la plage de 2,5 à 3,8, de préférence dans la plage de 3,2 à 3,8.

5. Peinture en dispersion selon l'une quelconque des revendications précédentes, comprenant en outre
au moins une charge calcitique b2), en particulier choisie dans le groupe constitué par le carbonate de calcium, les dolomites, les calcites, les aragonites et des mélanges quelconques de ces charges.

6. Peinture en dispersion selon l'une quelconque des revendications précédentes, **caractérisée en ce que**
la charge calcitique présente une valeur d50 inférieure ou égale à 3,0 µm, en particulier inférieure ou égale à 1,5 µm, et/ou, de préférence et, une valeur d90 inférieure ou égale à 8,0 µm, en particulier inférieure ou égale à 2,0 µm et/ou la charge silicatique présente une valeur d50 inférieure ou égale à 6,0 µm, en particulier inférieure ou égale à 4,0 µm, et/ou, de préférence et, une valeur d90 inférieure ou égale à 10,0 µm, en particulier inférieure ou égale à 8,0 µm, les valeurs d50 et d90 pouvant être déterminées selon DIN ISO 9276-1:2004-09 (représentation des résultats d'analyses de tailles de particules - partie 1 : représentation graphique) et ISO 9276-2:2014-05 (représentation des résultats d'analyses de tailles de particules - partie 2 : calcul de tailles de particules/diamètres et moments moyens à partir de distributions de tailles de particules).

7. Peinture en dispersion selon l'une quelconque des revendications précédentes, **caractérisée en ce que**
la charge silicatique est stable à un pH dans la plage de 10,0 à 12,5, de préférence dans la plage de 10,5 à 11,5.

8. Peinture en dispersion selon l'une quelconque des revendications précédentes, **caractérisée en ce que**
la quantité de verre soluble (proportion de solides), par rapport au poids total de la peinture en dispersion, est dans la plage de 0,3 à 1,2 pour cent en poids.

9. Peinture en dispersion selon l'une quelconque des revendications précédentes, **caractérisée en ce que**
l'additif est choisi dans le groupe constitué par les stabilisants, les agents mouillants, les épaississants, les dispersants, les neutralisants, les antimousses et des mélanges quelconques de ces composants, et comprend de préférence des antimousses, des épaississants, en particulier des épaississants d'éther de cellulose et/ou associatifs, et des agents mouillants, en particulier à base de copolymères de polyacrylate.

10. Peinture en dispersion selon l'une quelconque des revendications précédentes, comprenant
a) l'au moins un liant organique polymère à base d'une dispersion aqueuse de copolymère de styrène/acrylate,
b) l'au moins une charge silicatique b1), constituée de ou comprenant du kaolin,
c) l'au moins un pigment sous forme de dioxyde de titane, de préférence dans la modification rutile,
d) l'au moins un alkylalcoxysilane, un alkylalcoxysiloxane et/ou un alkylsiliconate, en particulier le méthylsiliconate de potassium,
e) l'au moins un additif, en particulier contenant ou constitué d'au moins un antimousse, d'au moins un épaississant, en particulier d'un épaississant d'éther de cellulose et/ou associatif, et d'au moins un agent mouillant, en particulier à base de copolymères de polyacrylate,
g) l'au moins un verre soluble sous forme de verre soluble de potassium et/ou de lithium, et
h) l'au moins un stabilisateur à base d'amine, ainsi que
f) le cas échéant l'au moins une charge légère sous forme de corps creux polymères, de préférence de corps creux polymères en polymères organiques.

11. Peinture en dispersion selon l'une quelconque des revendications précédentes, **caractérisée en ce que**
la proportion en poids sec de liant organique a), par rapport au poids total de la peinture en dispersion, est dans la plage de 5 à 35 pour cent en poids, de préférence dans la plage de 15 à 30 pour cent en poids, et/ou **en ce que** la proportion en poids de l'au moins une charge silicatique b1), par rapport au poids total de la peinture en dispersion, est supérieure à 2 pour cent en poids, de préférence supérieure à 4 pour cent en poids et de manière particulièrement préférée dans la plage de 5 à 50 pour cent en poids et/ou **en ce que** la proportion en poids de l'au moins un pigment c), par rapport au poids total de la peinture en dispersion, est supérieure ou égale à 1 pour cent en poids, de préférence supérieure ou égale à 2 pour cent en poids, de manière particulièrement préférée supérieure ou égale à 3 pour cent en poids et en particulier dans la plage de 3 à 35 pour cent en poids et/ou **en ce que**
la proportion en poids sec de verre soluble g), par rapport au poids total de la peinture en dispersion, est dans la plage de 0,3 à 1,2 pour cent en poids et/ou **en ce que**
la proportion en poids sec d'alkylsiliconate alcalin d), en particulier de méthylsiliconate de potassium, par rapport au poids total de la peinture en dispersion, est dans la plage de 0,1 à 2,5 pour cent en poids, de préférence dans la plage de 0,2 à 2,0 pour cent en poids et de manière particulièrement préférée dans la plage de 0,3 à 1,5 pour cent en poids et/ou **en ce que**
la proportion en poids sec d'additifs e), par rapport au poids total de la peinture en dispersion, est dans la plage de 0,2 à 5 pour cent en poids, de préférence dans la plage de 0,5 à 3,0 pour cent en poids et/ou **en ce que**
la proportion en poids sec de l'au moins un stabilisateur de verre soluble h), en particulier à base d'amine, par rapport au poids total de la peinture en dispersion, est dans la plage de 0,1 à 2 pour cent en poids, de préférence dans la plage de 0,1 à 1,0 pour cent en poids et/ou **en ce que**
la proportion en poids de l'au moins une charge calcitique b2), par rapport au poids total de la peinture en dispersion, est dans la plage de 0 à 35 pour cent en poids, de préférence dans la plage de 0,5 à 30 pour cent en poids et/ou **en ce que**
la proportion en poids de l'au moins une charge légère i) sous forme de corps creux polymères, par rapport au poids total de la peinture en dispersion, est dans la plage de 0 à 25 pour cent en poids, de préférence dans la plage de 0,5 à 15 pour cent en poids et/ou **en ce que**
la proportion d'eau, par rapport au poids total de la peinture en dispersion, est dans la plage de 20 à 70 pour cent en poids, de préférence dans la plage de 25 à 60 pour cent en poids et/ou **en ce que**
la somme des composants formant la peinture en dispersion étant toujours de 100,0 % en poids.

12. Revêtement obtenu à partir d'une peinture en dispersion selon l'une quelconque des revendications précédentes.

13. Revêtement selon la revendication 12, **caractérisé en ce que** celui-ci présente une brillance de la catégorie « Brillance moyenne » déterminée selon DIN EN ISO 2813:2014 (date de sortie : 2015-02) pour un angle de mesure de 60° ainsi que de 85° et classée selon DIN EN 13300 (édition 11.2002) ou une brillance de la catégorie « brillance élevée » déterminée selon DIN EN ISO 2813:2014 (date de sortie : 2015-02) pour un angle de mesure de 60° et un angle de mesure de 85° et classée selon DIN EN 13300 (édition 11.2002).

14. Utilisation de la peinture en dispersion selon l'une quelconque des revendications 1 à 11 pour le revêtement de surfaces de substrats, en particulier de façades de bâtiments ou des murs d'intérieurs de bâtiments.

15. Utilisation selon la revendication 14, **caractérisée en ce que** le revêtement est un revêtement avec une brillance de la catégorie « Brillance moyenne » déterminée selon DIN EN ISO 2813:2014 (date de sortie : 2015-02) pour un angle de mesure de 60° et classée selon DIN EN 13300 (édition 11.2002) ou un revêtement avec une brillance de la catégorie « brillance élevée » déterminée selon DIN EN ISO 2813:2014 (date de sortie : 2015-02) pour un angle de mesure de 60° et un angle de mesure de 85° et classée selon DIN EN 13300 (édition 11.2002).
